# EUROPEAN PATENT APPLICATION

(11) **EP 2 796 478 A1**
(43) Date of publication of application: **29.10.2014**
(21) Application number: 11877783.8
(22) Date of filing: 22.12.2011
(51) Int. Cl.: C08F 4/02, C08F 4/06, C08F 4/10, C08F 4/16, C08F 4/64, C08F 110/00

(54) **ALUMINA-SUPPORTED CATALYST FOR USE IN OLEFIN POLYMERIZATION AND METHOD FOR PREPARING SAME**

(71) Applicant: Petroleo Brasileiro S.A. - PETROBRAS, CEP 20035-900-Rio de Janeiro (BR)
(72) Inventor: BARTOLIN RAMIS, Luciana, Cep: 22745-270 Rio de Janeiro - RJ (BR); REIS DA CUNHA, Fernando, Cep: 22230-061 Rio de Janeiro - RJ (BR); SILVA DIAS, Rafael, Cep. 22021-020 Rio de Janeiro - RJ (BR); DANTAS DO VALE BATISTA, Natalia, Cep: 25070-110 Duque de Caxias - RJ (BR)
(74) Representative: Simons, Amanda Louise
(86) International application number: PCT/BR2011/000487
(87) International publication number: WO 2013/091033

(57) **Abstract**

The present invention relates to a supported catalyst for the polymerization of olefins. More specifically, the present invention provides a catalyst comprising a spherical alumina support modified by the addition of a magnesium compound containing a magnesium alkoxide and the product of the reaction of it with a titanium halide. The present invention also relates to the method for preparing said supported catalyst.

## Description

### FIELD OF THE INVENTION

The present invention relates to a catalyst supported on alumina for use in polymerization of olefins, more specifically to a catalyst of Ziegler-Natta type comprising a spherical alumina support modified by the addition of a magnesium compound, preferably a magnesium alkoxide being the modified support subsequently subjected to titanation through a reaction with a titanium halide. The method of preparation of the mentioned supported catalyst is also an object of this invention.

### BACKGROUND OF THE TECHNIQUE

Catalysts for the polymerization of polyolefins formed by the reaction of magnesium compounds, more specifically magnesium alkoxides with transition metal halides, are known.

Document EP 2006/001343 makes known a process wherein a magnesium alkoxide is reacted with a transition metal compound, the reaction product being subjected to a thermal post-treatment.

Document US 7008898 already discloses a process for obtaining a catalyst in which a gelatinous dispersion of magnesium alkoxide is reacted with a transition metal compound and an organometallic compound.

The catalysts prepared according to the above two documents, however, do not exhibit morphological control, and thus such catalysts are not applicable in various technological polymerization platforms. Moreover, the polymers produced from such catalytic systems exhibit low apparent density, compromising the transport and storage of such powders.

Catalysts for the polymerization of olefins with spherical morphology are also known. Many of these catalysts are obtained through processes using adducts of magnesium chloride. Catalysts of magnesium chloride exhibit a very high polymerization kinetics, not always suitable for their use directly in processes for polymerizing ethylene in a gaseous phase, in which case many pre-polymerization steps are then necessary.

Document EP 0553805, for example, describes the process of preparing a catalyst with spherical morphology controlled using an adduct of magnesium chloride as the precursor. However, due to their high polymerization kinetics and high activity, especially for processes for producing polyethylene, such catalysts must undergo pre-polymerization steps.

The pre-polymerization step comprises the initial polymerization with propylene necessary for protecting the structure of the catalyst, preventing the breakdown of particles in the polymerization process into gas phase and for minimizing its activity when the catalyst is fed into gas phase reactors for polymerization with ethylene. Moreover, in order for catalysts subjected to steps of pre-polymerization with propylene to exhibit adequate isotacticity, they require internal donors. The use of internal donors, however, aside from making the catalyst more expensive, can also entail a poor incorporation of comonomers during their polymerization with ethylene, in particular for the production of linear low density polyethylene (LLDPE).

The use of magnesium chloride in catalyst preparation processes for the polymerization of olefins also has the disadvantage of high corrosiveness, which can be overcome or at least minimized, through the use of magnesium alkoxide as proposed in the present invention.

Among the catalysts supported with spherical morphology, the vast majority of patents and bibliographical references use silica as a support. Alumina is currently a far less common support in the literature. The Lewis acidity present in alumina affects the properties of the catalyst, such as its catalytic activity and behavior of active sites during the polymerization, thus differentiating it from catalysts supported on silica. Furthermore, silica exhibits as one of its characteristics high static, primarily observed in polymerization processes in a gas phase.

The development of catalyzers supported on alumina for the polymerization of polyolefins is described in some documents.

Document PI 9301438-4 describes a process for preparing a spherical alumina support for polymerization of alpha olefins from an ammonium dawsonite, which is spray dried to form spherical particles, which, through calcination and impregnation with titanium, produce an also spherical catalyst with good mechanical strength. The document also describes a polymerization process which, in the presence of the spherical catalyst, produces polyethylene particles that maintain the sphericity of the support with a low flow angle and good density.

Document PI 0900952-3 previously disclosed a process for obtaining a catalyst by modification of the support described in document PI 9301438-4, by mixing the alumina with varying amounts of magnesium chloride previously dissolved in ethers or alcohols, such that, as the amount of added magnesium halide varies, the other components of the catalytic system are kept constant.

Application of this catalyst in the polymerization of ethylene leads to the obtaining of a spherical polyethylene with high bulk density, in the range of 0.30 g/cm³ to 0.35 g/cm³ and particle size suitable for application to the polymerization of ethylene both in a gaseous phase and in mud.

Catalyzers supported in silica and alumina with spherical morphology containing magnesium and titanium are known. These catalyzers are normally prepared with magnesium chloride and a transition metal halide, usually titanium tetrachloride. One of the ways of adding magnesium chloride to the silica support is by impregnating the support with a solution containing magnesium chloride followed by evaporation of the solvent.

Therefore, there is still a need for catalysts for the polymerization of olefins that exhibit low corrosiveness, high resistance to deactivation, stability and mechanical strength, as well as methods for preparing such simple catalysts and that allow for morphological control of them, such as described in detail below.

### SUMMARY OF THE INVENTION

The primary objective of the present invention is to provide a catalyst for the polymerization of olefins, comprising a spherical alumina support, modified by the addition of a magnesium compound, preferably a magnesium alkoxide, the modified support subsequently being subjected to titanation through a reaction with a titanium halide.

The catalysts are prepared from a spherical alumina support, by mixing the alumina with a carbonated alcohol solution containing a magnesium alkoxide. The support is then subjected to a titanation stage, comprising a reaction with a titanium halide.

In the preparation of the catalysts of the present invention, internal donors, particularly interesting in the case of catalysts having polymerization with propylene as an application, may also optionally be added.

The support can also be optionally subjected to a reaction with an alkylaluminum type compound in a stage prior to the titanation process.

Such catalysts are used in catalytic systems in the presence of a co-catalyst for producing polyolefins by means of the polymerization reaction, exhibiting high mechanical resistance, excellent catalytic activity, as well as high stability or less susceptibility to catalytic deactivation processes resulting from transport and storage when compared to catalysts supported on magnesium chloride.

The catalysts covered by the present invention exhibit an excellent response to hydrogen and alkylaluminum, which are variables in the olefin polymerization process, thus making it possible for various grades of polyolefins to be produced from a single catalyst, enabling the production of polymers for a broader variety of shaping processes, such as extrusion, injection, blow molding, rotational molding and spinning, among others.

The use of such catalysts in polymerization processes leads to obtaining a polymer of spherical morphology, with excellent dry flow capacity, and very high bulk density greater than 0.40 g/cm³.

A method of preparation of the mentioned supported catalyst is also an object of this invention. This method makes it possible to adjust the catalytic activity according the process for which the catalyst will be used, which are: polymerization and copolymerization processes with various monomers such as ethylene, propylene and butene, both in a gas phase as well as in a mass and in mud.

The method of preparing the catalyst of the present invention also permits control of porosity, both in alumina and in the magnesium compound, allowing good incorporation of ethylene into the porous matrix during polymerization in the production of polypropylene impact copolymers, for example.

Moreover, the method described in the present invention enables the use of aluminas with various average particle size values, permitting the production of catalysts with different average particle sizes. Such factors are extremely useful and desirable industrially, as they make it possible to adjust the catalyst to the conditions required for each polymerization process.

### DETAILED DESCRIPTION OF THE INVENTION

The present invention relates to a solid catalyst of the Ziegler-Natta type for use in polymerization of olefins, more specifically, a catalyst supported in alumina containing magnesium and titanium. The supported catalyst for olefin polymerization of the invention comprises a spherical alumina support modified by the addition of a magnesium compound, more specifically, a magnesium alkoxide and the product of the reaction of it with a titanium halide and optionally an internal donor.

A method of preparation of the mentioned supported catalyst is also an object of this invention. Generally speaking, the method of the present invention consists of bringing a carbonated alcohol solution of a magnesium compound, specifically magnesium alkoxide, into contact with a spherical alumina support, evaporating said alcohol, and then reacting the obtained mixed support with a titanium compound and optionally an internal electron donor.

The method of preparation of the catalyst is done under an inert atmosphere. The reagents used are previously dried, free from moisture and oxygen, through the use of known techniques, such as the use of molecular sieves and stripping with inert gas. Examples of suitable inert gases are nitrogen and argon.

The method for preparing the mentioned supported catalyst comprises the following steps:
a) Obtaining an alumina support modified by magnesium, including the following steps:
   i) preparation of a carbonated alcohol solution of a magnesium compound in an alcohol by mixing a magnesium compound, an alcohol and carbon dioxide (CO₂);
   ii) mixing of the carbonated alcohol solution with a spherical alumina support resulting in a suspension, which is subjected to heating to obtain the mixed alumina support and magnesium compound in the form of a dry powder;
b) Titanation of the mixed support of alumina and magnesium compound, which comprises the following steps:
   i) inducing the reaction of a titanium halide with the mixed support of alumina and magnesium compound; this step may be repeated by removing the liquid phase and newly adding titanium halide;
   ii) washing of the catalyst obtained with an inert hydrocarbon.

The preparation of the alumina support modified by magnesium (step a) comprises the preparation of a carbonated alcohol solution of a magnesium compound in an alcohol, mixing this solution with an alumina support, followed by evaporation of the alcohol to obtain a dry powder.

The preparation of the carbonated alcohol solution of the magnesium compound into an alcohol consists of mixing a magnesium compound, an alcohol and carbon dioxide.

The magnesium compound is selected from the group consisting of a magnesium alkoxide or a mixture of a magnesium alkoxide and a magnesium halide.

The formula for magnesium alkoxide is Mg(OR)₂, where R is a branched or unbranched alkyl radical, containing from 1 to 10 carbon atoms, preferably 1 to 4 carbon atoms. Some examples of such magnesium alkoxides are: magnesium dimethoxide, magnesium diethoxide, magnesium di-n-propoxide, magnesium di-i-propoxide, and magnesium di-n-butoxide. Preference is given to magnesium diethoxide, also called magnesium ethylate, or simply magnesium ethoxide.

The formula for magnesium halide is MgX₂, where X is a halide atom. Preference is given to magnesium chloride.

In the case of mixtures of magnesium alkoxide and magnesium halide, the proportion of the molar ratio Mg(OR)₂ / MgX₂ in the range of 0.1 to 82, preferably between 0.5 and 7, is used.

Among the alcohols that can be used in the process of this present invention are the alkyl alcohols with 1 to 12 carbon atoms. Examples of alcohols include methanol, ethanol, n-propanol, iso-propanol, n-butanol, iso-butanol, n-pentanol, n-hexanol, cyclohexanol. Preference is given to simple alcohols, particularly ethanol.

Carbon dioxide (CO₂) is used in a proportion of from 0.01 g to 1.0 g CO₂/g of solution for the solubilization of the magnesium compound in alcohol, more specifically of the magnesium alkoxide in alcohol.

The alcohol, magnesium compound and carbon dioxide can be combined in any order of addition for preparing the solution. The preferred manner of preparation involves adding the magnesium compound to the alcohol followed by the addition of carbon dioxide, this process preferably being performed under agitation, in order to homogenize the solution.

The carbonated alcohol solution containing the thus prepared magnesium compound is then mixed with the spherical alumina support resulting in a suspension containing alumina and the carbonated alcohol solution of the magnesium compound.

The proportion of carbonated alcohol solution relative to the alumina support used is in the range of 1 ml to 12 ml of solution per gram of support, more preferably from 2 ml to 8 ml of solution per gram of support.

The amount of magnesium compound used in the preparation of the catalyst is directly related to the magnesium content of the resulting catalyst, which is one of the most influential factors in its catalytic activity.

The proportion of magnesium compound relative to the alumina support (Al₂O₃) is based on the molar ratio Al₂O₃/Mg, which varies between 0.3 and 80, preferably between 0.8 and 36.

The mixing of the carbonated alcohol solution with the alumina support may be performed in any order, both the addition of the support onto the solution and the addition of the solution onto the support, the latter being the preferred manner of preparation.

The alumina used in this invention exhibits characteristics enabling its use as a catalytic support for obtaining catalysts for the polymerization of polyolefins, that is, the alumina support used contributes directly to the performance exhibited by the catalyst during polymerization, and also influences the properties of the polymers obtained through the polymerization of these catalysts, as the catalytic sites of the catalyst obtained by the present invention are due not only to the magnesium compound, but also to the catalytic sites present in the alumina.

The characteristics of the alumina used in the present invention derive from the method of its preparation and activation. Examples of the method of preparation and activation of aluminas suitable for this invention are found in the patent PI 9301438-4, owned by the applicant, and cited herein as reference.

The alumina support used in the present invention exhibits spherical morphology. The spherical morphology in this specification is measured as the ratio between the maximum and minimum linear diameter of the particle, which in this case is less than 1:5, preferably less than 1:3.

The alumina support used exhibits a pore volume of between 0.4 ml/g and 5.0 ml/g, preferably between 0.7 ml/g and 4.0 ml/g.

The alumina surface area used is between 80 m²/g and 1600 m²/g, preferably between 130 m²/g and 500 m²/g. The pore volume and the surface area can be measured using the B.E.T. method by nitrogen adsorption.

The average particle diameter of the support is from 5 µm to 140 µm. The average particle diameter ideal for preparing the catalyst depends on the polymerization process in which the catalyst is used. Thus, each polymerization process will require a specific average diameter range and consequently catalytic support. The average diameter can be measured by laser diffraction based methods.

The alumina support used in this invention exhibits hydroxide groups on its surface. The hydroxide content in the alumina support can be controlled through the alumina activation step, which is usually done by calcining the alumina at temperatures ranging between 300°C and 850°C. The higher the calcining temperature, the lower the hydroxyl content of the alumina support. Another way of regulating the hydroxyl surface content is through the chemical reaction of these with certain compounds, such as for example, alkylaluminum type compounds.

The hydroxyl content of the aluminas, as well as their type (vicinal or not) contribute to the performance exhibited by the resultant catalyst, as well as to the properties of the polymer obtained when such catalysts are used in polymerization processes. The alumina support used in the present invention exhibits a hydroxyl surface content ranging from 0.1 mmol to 2.5 mmol of hydroxyl groups per gram of solid support, preferably from 0.2 mmol to 2.0 mmol.

The suspension resulting from mixing the alumina support with a carbonated alcohol solution containing the magnesium compound is subjected to heating to obtain the alumina support modified by magnesium in the form of a dry powder.

Heating the alcohol alumina suspension is usually done at a temperature above the boiling temperature of the alcohol used to prepare the solution in order to evaporate it. The suspension is heated at a temperature between 40°C and 220°C, preferably between 60°C and 150°C. The ideal temperature range for this step of the preparation of the catalyst depends on the alcohol and on the magnesium compound used. The suspension is allowed to evaporate for a period of time between 20 minutes and 8 hours. The alcohol can be evaporated with agitation.

The alcohol can be evaporated by various methods and equipment, including but not limited to heating, using a vacuum, inert gas stripping, use of evaporators, evaporators with agitation and rotary evaporators. Following the mentioned process the mixed alumina support and magnesium compound is obtained in the form of a dry powder.

The thus obtained alumina support modified by magnesium also contains residual alcohol in its composition. Normally, the molar ratio of the alcohol in relation to the magnesium in the resulting modified support is in the range between 0.3 and 6.

The mixture of the alumina support and magnesium compound can optionally be dealcoholized (partial or complete removal of residual alcohol). One of the ways of dealcoholization is through the reaction of the support with alkylaluminum type compounds.

The reaction with the alkylaluminum type compound, as mentioned above, can also be done on the alumina support in order to adjust the amount of surface hydroxyls of the alumina.

In the method of preparation of the catalyst of the present invention, the reaction with the alkylaluminum type compound is optional and may be done for the alumina support, for the alumina support modified by magnesium or even for both.

In both cases, the reaction of the support with an alkylaluminum type compound is preferably done in a suspension containing an inert hydrocarbon, under agitation for a period of time required for the reaction. A preferred form of implementation of the reaction involves the addition of the alkylaluminum onto a suspension containing a hydrocarbon and the support.

Examples of hydrocarbons that can be used in the reaction of the support with the alkylaluminum compound are alkanes and cycloalkanes containing 5 to 12 carbon atoms or mixtures thereof. Examples of these hydrocarbons are pentane, hexane, heptane and cyclohexane. Preference is given to hexane.

Among the types of alkylaluminum compounds are preferably compounds of the trialkylaluminum type and alkylaluminum chlorides. Examples of these compounds are triethylaluminum (TEA), triisobutylaluminum (TIBA), trimethylaluminum (TMA), tri-n-butylaluminum, tri-n-hexylaluminum, diethylaluminum chloride (DEAC), diisobutylaluminum chloride, dimethylaluminum chloride (DMAC). It is also possible to use mixtures of these alkylaluminums. Preference is given to triethylaluminum (TEA).

The proportion of hydrocarbon in relation to the support mass used for the reaction is between 4 ml and 20 ml for each gram of support.

The amount of alkylaluminum used depends on the type of support used. For the alumina support, the amount of alkylaluminum used is calculated by the alkylaluminum molar ratio and the hydroxyl content. For the mixed support the amount of alkylaluminum used is calculated by the molar ratio between the alkylaluminum and residual alcohol in the support. Both these molar ratios range from 0.1 to 5.0 , preferably from 0.2 a 2.0.

The reaction of the support with the alkylaluminum type compound can be done at temperatures between 0°C and 60°C. This reaction is preferably done at ambient temperature, that is, between 20°C and 25°C.

The support mixture, alkylaluminum and hydrocarbon is maintained, preferably under agitation for a period of time ranging from 5 minutes to 5 hours, preferably between 10 minutes and 2 hours.

Once the stipulated time has elapsed, the support is separated from the reactive liquid medium. The support can be separated in several ways, such as, for example, filtration, drainage, decanting, siphoning the liquid and others. The preferred manner is decantation of the support following siphoning of the supernatant liquid. It is useful to wash the support one or more times to remove the reaction products. The washings involve the addition of hydrocarbon, agitation of the suspension and separation of the support from the liquid.

The thus obtained alkylated support may be dried or kept in hydrocarbon suspension.

The support can be dried by various methods, for example, by means of heating, vacuum, fluidation using an inert gas, among others.

The titanation step consists of inducing the reaction of a titanium halide with the alumina support modified by magnesium. An internal donor can also be added at this stage.

Examples of titanium halides that may be used include TiCl₄, TiBr₄ and Til₄ and mixtures of them. The use of TiCl₄ is preferred. Pure titanium halides or those diluted with hydrocarbons can be used.

Examples of hydrocarbons suitable for the titanation reaction in diluted form are: pentane, hexane, cyclohexane, heptane, benzene, toluene and isoparaffin. It can be diluted in a broad range, the volumetric proportion of the titanium compound in relation to the hydrocarbon of which ranges between 5% and 90%. The titanation process can also be done under pressure, in order to keep the hydrocarbon mix and titanium compound in liquid form at the desired temperature for the titanation reaction. The amount of titanium halide used is 1 to 50 moles of titanium per mol of magnesium in the support.

The titanation reaction is carried out at a temperature between 0°C and 150°C, preferably between 80°C and 135°C, for a period of 30 minutes to 6 hours, preferably for 1 to 3 hours.

An internal electron donor can optionally be used at this stage. Generally speaking, the electron donor compounds are used to prepare the catalysts for the propylene polymerization. Internal donors can be of various chemical classes and include, but are not limited to, benzoates, phthalates and 1,3-diethers. Some examples of benzoates include: methyl benzoate, ethyl benzoate, methyl toluate and ethyl anisate. Some examples of phthalates are: dimethyl phthalate, diethyl phthalate, dipropyl phthalate, diisopropyl phthalate, dibutyl phthalate, diisobutyl phthalate, diphenyl phthalate and dioctyl phthalate. Some examples of 1,3-diethers are: 2-methyl-2-isopropyl-1,3-dimethoxypropane, 2,2-diisobutyl-1,3-dimethoxypropane and 2-isopropyl-2-cyclopentyl-1,3-dimethoxypropane.

The addition of the internal donor may occur before, after or simultaneously with the addition of the titanium compound. The reaction of the support with the internal donor is usually done simultaneously with the titanation reaction in the same reaction medium. The amount of internal donor [doador interno] (DI) added is calculated as a function of the molar ratio Mg/DI, which varies from 4 to 20, preferably from 7 to 13.

Following the titanation reaction the catalyst is washed with an inert hydrocarbon to remove inactive titanium compounds, chlorides and other impurities. This is normally a hot washing, at temperatures varying between 60°C and 140°C. Examples of inert hydrocarbons that can be used for washing the catalyst include but are not limited to: hexane, heptane, octane, toluene and isoparaffin.

The thus obtained catalyst can be kept in hydrocarbon or dry suspension and stored under an inert atmosphere for its subsequent use in an olefin polymerization process.

The support can be dried by various methods, for example, by means of heating, vacuum or fluidation using an inert gas, among others.

The supported catalyst for olefin polymerization of the present invention has the following specifications:
- The percentage of magnesium is a function of the amount of the magnesium compound added during its preparation. The percentage by mass of magnesium in the catalyst varies between 0.3% and 15.0%, preferably between 0.6% and 10.0%.
- The percentage by mass of titanium varies between 0.4% and 6.0%, preferably between 0.8% and 3.8%.
- The percentage by mass of aluminum varies between 9.0% and 48.0%, preferably between 15.0% and 44.0%.
The size and morphology of the catalyst is directly dependent on the support used, and normally does not vary significantly with respect to the properties of the support used, both in terms of its mean diameter and in terms of its size distribution.

Thus, the catalyst of the present invention exhibits spherical morphology, as the support, the spherical morphology being measured by the ratio between the largest and the smallest linear diameter of the particle, which in this case is less than 1:5, preferably less than 1:3 .

The average particle diameter of this catalyst is between 5 µm and 140 µm.

For the use of the catalyst for the polymerization of polyolefins, the catalyst is mixed with a co-catalyst, typically an alkylaluminum type compound, for the formation of a catalytic suspension. External electron donor compounds are normally used in the case of polymerization with propylene. The catalytic suspension is then used in an olefin polymerization or copolymerization process. Such processes can be in suspension, in mass or in a gaseous phase. In this way polymers, such as high density polyethylene (HDPE), linear low density polyethylene (LLDPE) and polypropylene (PP), are obtained.

### EXAMPLES

The following examples illustrate this present invention, but must not, however, be considered to be limiting.

In these examples the concentrations of titanium, magnesium and aluminum were determined by atomic absorption analysis of the resulting solution after acid digestion of the catalyst.

The bulk density of the polymers was determined according to the procedure indicated in the ASTM D1895 standard.

The MFI (melt flow index) of the polymers was determined according to the procedure indicated in the standard ASTM D1238.

### EXAMPLE 1

In this example, the catalyst obtained exhibited a titanium content of 1.4%, magnesium content of 2.2% and aluminum content of 37.0%, and was synthesized according to the below description.

### 1.1. Obtaining the aluminum support and magnesium compound.

A solution was prepared by adding 4.3 g of Mg(OEt)₂ to 160 ml of ethanol previously treated with a molecular sieve, followed by the addition of 69 grams of solid carbon dioxide.

The thus prepared solution was added to 30 g of spherical alumina support prepared according to the examples presented in the patent PI 9301438-4. The molar ratio Al₂O₃/Mg used in this case was 7:8.

This suspension was transferred under argon flow to a rotary evaporator at a temperature of 90°C and 60 rpm and maintained under these conditions for two hours, when the alumina support and magnesium compound were obtained in the form of a dry powder.

### 1.2. Reaction of the alumina support and the magnesium compound with the alkylaluminum type compound.

The powder obtained according to item 1.1. was transferred to a system equipped with mechanical agitation, to which 200 ml of hexane was added with agitation and 19 ml of a 15% solution of tri-ethyl aluminum in heptane. After 60 minutes under agitation, it was allowed to decant and following decanting the supernatant liquid was removed by siphoning. It was then washed 5 times with 150 ml of n-hexane. Once the washings were completed, the support treated with alkylaluminum was dried by fluidization with argon.

### 1.3. Titanation of the support.

Under inert atmosphere, in a reactor agitated at 500 rpm, 5 g of the support obtained according to step 1.2. were added to 50 ml of TiCl₄ at 0°C. The temperature was raised to 100°C and it was left to react for 1 hour under agitation. The liquid was drained and another 50 ml of TiCl₄ at a temperature of 100°C was added. The reactor temperature was raised to 120°C and they were left under agitation for more than 1 hour. The liquid was drained and 5 washings were performed with hexane at 69°C. Thereafter it was dried by stripping with argon at 60°C to obtain a dry catalyst that appeared to be free flowing.

### 1.4. Polymerization with ethylene.

The polymerization was done in a 3.6 L total capacity steel reactor equipped with temperature control and pressure gauge for pressure monitoring. Two liters of hexane previously treated in a molecular sieve and subjected to stripping with argon to remove dissolved oxygen were added to the reactor.

A suspension containing 3 ml of a 15% solution of triethylaluminum in heptane and 64 mg of catalyst obtained according to item 1.3 was transferred to the reactor. Hydrogen at a partial pressure of 1.1 kgf/cm² (107.9 kPa) and ethylene fed during the reaction at the partial pressure of 10.0 kgf/cm² (980.7 kPa) were added to the reactor. The polymerization was done at 85°C for two hours. The thus obtained polyethylene exhibited bulk density of 0.45 g/cm³ and MFI of 1.66 g/10 min (190°C/21.6 kg). The catalytic activity calculated for the reaction was 5.1 kg of PE [polypropylene]/g of catalyst.

### 1.5. Polymerization with ethylene and 1-butene.

The catalyst obtained according to item 1.3 was polymerized with 1-butene as comonomer for obtaining a linear low density polyethylene (LLDPE). The polymerization was done as described in item 1.4. except that, after adding the catalytic suspension to the reactor, 51 g of 1-butene were added. The hydrogen partial pressure used was 0.8 kgf/cm² (78.5 kPa) and the amount of catalyst added was 70 mg. The other conditions were kept constant.

The polymer obtained exhibited a bulk density of 0.46 g/cm³, true density of 0.914 g/cm³ (ASTM D792), MFI of 3.45 g/10 min. (190°C/21.6 kg) and the catalytic activity calculated for the reaction was 7.5 kg of LLDPE/g of catalyst.

### EXAMPLE 2

In this example, the catalyst obtained exhibited a titanium content of 1.9%, magnesium content of 6.8% and aluminum content of 25.3%, and was synthesized according to the below description.

### 2.1. Obtaining of the alumina support and magnesium compound.

The preparation in this step was similar to example 1.1. The amount of Mg(OEt)₂ used was 16.4 g, 200 ml of ethanol and 25 g of spherical alumina support (molar ratio Al₂O₃/Mg = 1.7). The other conditions were kept constant.

### 2.2. Reaction of the alumina support and the magnesium compound with the alkylaluminum type compound.

The preparation at this step was similar to example 1.2. In this case, 21 ml of a 15% solution of triethyl aluminum in heptane were used. The other conditions were kept constant.

### 2.3. Titanation of the support.

Under inert atmosphere, in a reactor agitated at 500 rpm, 7.2 g of the support obtained according to step 2.2. were added to 50 ml of TiCl₄ at 0°C. The temperature was raised to 30°C and 5.9 ml of a 10% solution by volume of diisobutyl phthalate in hexane (internal donor) were added; then the temperature was raised to 100°C and it was left to react for 1 hour under agitation. The liquid was drained and another 50 ml of TiCl₄ at a temperature of 100°C were added. The reactor temperature was raised to 120°C and they were left under agitation for more than 1 hour. The liquid was drained and 5 washings were performed with hexane at 69°C. Thereafter drying was performed under fluidization with argon at 90°C to obtain the dried catalyst.

### 2.4. Polymerization with ethylene.

The polymerization was done in a 3.6 L total capacity steel reactor equipped with temperature control and pressure gauge for pressure monitoring. Two liters of hexane previously treated in a molecular sieve bubbled with argon to remove dissolved oxygen were added to the reactor.

A suspension containing a 15% solution of triethylaluminum in heptane, 0.9 ml of a 10% solution by volume of cyclohexyl methyl dimethoxysilane (external donor) in hexane and 98 mg of catalyst obtained in item 2.3. was transferred to the reactor. Hydrogen at a partial pressure of 1.0 kgf/cm² (98.1 kPa) and propene fed during the reaction at the partial pressure of 8.0 kgf/cm² (784.5 kPa) were added to the reactor. The polymerization was done at 70°C for two hours. The thus obtained polypropylene exhibited a bulk density of 0.48 g/cm³ and MFI of 87.1 g/10 min (230°C/2.16 kg). Catalytic activity calculated for the reaction was 2.9 kg of PP/g of catalyst.

### Example 3

In this example, the catalyst obtained exhibited a titanium content of 1.0%, magnesium content of 2.4% and aluminum content of 36.6%, and was synthesized according to the below description.

### 3.1. Obtaining the aluminum support and magnesium compound.

The preparation in this step was similar to example 1.1. 2.1 g of Mg(OEt)₂, 1.6 g of MgCl₂, 200 ml of ethanol, 30 g of the alumina spherical support (molar ratio Al₂O₃/Mg = 8.3 and Mg(OR)₂ / MgX₂ ratio = 1:1) and 60 g of CO₂ solid were used. The other conditions were kept constant.

### 3.2 Titanation of the support.

The support obtained according to item 3.1 was subjected directly to the titanation process without carrying out the reaction with the alkylaluminum type compound. The titanation of this support was done similarly to example 1.3.

### 3.3. Polymerization with ethylene.

The polymerization was done as described in item 1.4. The hydrogen partial pressure used was 1.1 kgf/cm² (107.9 kPa) and the amount of catalyst added was 74 mg. The other conditions were kept constant. The polymer obtained exhibited a bulk density of 0.43 g/cm³ and the catalytic activity calculated for the reaction was 3.5 kg of PE/g of catalyst.

## Claims

1. **SUPPORTED SOLID CATALYST OF THE ZIEGLER-NATTA TYPE FOR POLYMERIZATION OF OLEFINS,** **characterized in that** it comprises a spherical support of alumina modified with magnesium, with an Al₂O₃/Mg molar ratio between 0.3 and 80, by incorporating titanium, wherein the percentages by mass of each component relative to total mass of catalyst are:
a) between 0.4% and 6.0%, for titanium;
b) between 0.3% and 15.0%, for magnesium;
c) between 9.0% and 48.0%, for aluminum.

2. **CATALYST, according to claim 1,** **characterized in that** the percentage by mass of magnesium is between 0.6% and 10.0% relative to the total catalyst mass.

3. **CATALYST, according to claim 1,** **characterized in that** the percentage by mass of titanium is between 0.8% and 3.8% relative to the total catalyst mass.

4. **CATALYST,** according to claim 1, **characterized in that** the percentage by mass of aluminum is between 15.0% and 44.0% relative to the total catalyst mass.

5. **CATALYST,** according to claim 1, **characterized in that** the molar ratio Al₂O₃/Mg is between 0.8 and 36.

6. **CATALYST,** according to claim 1, **characterized in that** it exhibits a ratio between the largest and smallest linear particle diameter less than 1:5; average particle diameter between 5 µm and 140 µm; and due to the alumina support exhibits a pore volume between 0.4 ml/g and 5.0 ml/g; surface area between 80 m²/g and 1600 m²/g; and surface hydroxyl content of from 0.1 mmol to 2.5 mmol of hydroxyl groups per gram of solid support.

7. **CATALYST,** according to claims 1 and 6, **characterized in that** it exhibits a ratio between the largest and smallest linear diameter of the particle less than 1:3.

8. **CATALYST,** according to claims 1 and 6, **characterized in that** the surface area of the support is between 130 m²/g and 500 m²/g.

9. **CATALYST,** according to claims 1 and 6, **characterized in that** the pore volume of the support is between 0.7 ml/g and 4.0 ml/g.

10. **CATALYST,** according to claims 1 and 6, **characterized in that** the support exhibits a surface hydroxyl content from 0.2 mmol to 2.0 mmol of hydroxyl groups per gram of solid support.

11. **METHOD OF PREPARATION OF ZIEGLER-NATTA SUPPORTED SOLID CATALYST,** defined according to claim 1, **characterized in that** it comprises the following steps:
a) Obtaining an alumina support modified by magnesium, including the following steps:
i) preparation of a carbonated alcohol solution of a magnesium compound in an alcohol by mixing a magnesium compound, an alcohol and carbon dioxide (CO₂);
ii) mixing of the carbonated alcohol solution with a spherical alumina support resulting in a suspension, which is subjected to heating to obtain the mixed alumina support and magnesium compound in the form of a dry powder;
b) Titanation of the mixed support modified by magnesium, comprising the following steps:
i) inducing the reaction of a titanium halide with the alumina support modified by magnesium; this step may be repeated by removing the liquid phase and again adding titanium halide;
ii) washing of the catalyst obtained with an inert hydrocarbon.

12. **METHOD,** according to claim 11, **characterized in that** the magnesium compound is selected from among: a magnesium alkoxide, a magnesium halide or a mixture thereof.

13. **METHOD,** according to claim 12, **characterized in that** the formula for the magnesium alkoxide is Mg(OR)₂, where R is an alkyl radical with 1 to 10 carbon atoms.

14. **METHOD,** according to claims 11, 12 and 13, **characterized in that** the magnesium alkoxide is selected from: magnesium dimethoxide, magnesium diethoxide, magnesium di-n-propoxide, magnesium di-i-propoxide and magnesium di-n-butoxide.

15. **METHOD,** according to claims 11 and 12, **characterized in that** the formula for the magnesium halide is MgX₂, where X is a halogen atom.

16. **METHOD,** according to claim 15, **characterized in that** X is a chlorine atom.

17. **METHOD,** according to claim 12, **characterized in that** the molar ratio of the mixture of magnesium alkoxide and magnesium halide is Mg(OR)₂ / MgX₂ in the range of 0.1 to 82.

18. **METHOD,** according to claim 17, **characterized in that** the molar ratio Mg(OR)₂ / MgX₂ is in the range between 0.5 and 7.

19. **METHOD,** according to claim 11, **characterized in that** the alcohol is an alkyl-alcohol with 1 to 12 carbon atoms.

20. **METHOD,** according to claim 19, **characterized in that** the alkyl alcohol is selected from methanol, ethanol, n-propanol, iso-propanol, n-butanol, iso-butanol, n-pentanol, n-hexanol and cyclohexanol.

21. **METHOD,** according to claim 11, **characterized in that** the carbon dioxide (CO₂) is added to the solution, in the proportion from 0.01 g to 1.0 g of CO₂/g of solution.

22. **METHOD,** according to claim 11, **characterized in that** the proportion of carbonated alcohol solution relative to the alumina support is in the range from 1 ml to 12 ml of solution per gram of support.

23. **METHOD,** according to claim 11, **characterized in that** the proportion of carbonated alcohol solution relative to the alumina support is in the range from 2 ml to 8 ml of solution per gram of support.

24. **METHOD,** according to claim 11, **characterized in that** the heating of the suspension in step a) ii) is done at a temperature between 40°C and 220°C, for a period of time between 20 minutes and 8 hours.

25. **METHOD,** according to claim 24, **characterized in that** the heating of the suspension in step a) ii) is done at a temperature between 60°C and 150°C.

26. **METHOD,** according to claim 11, **characterized in that** the spherical alumina support prior to being subjected to step a) is optionally subjected to a reaction with an alkylaluminum type compound.

27. **METHOD,** according to claim 11, **characterized in that** the spherical alumina support after being subjected to step a) is optionally subjected to a reaction with an alkylaluminum type compound.

28. **METHOD,** according to claim 26 or 27, **characterized in that** the reaction with the alkylaluminum type compound is done under agitation and in a suspension containing an inert hydrocarbon.

29. **METHOD,** according to claim 28, **characterized in that** the inert hydrocarbon is an alkane or cycloalkane, containing 5 to 12 carbons or mixtures thereof.

30. **METHOD,** according to claim 28, **characterized in that** the inert hydrocarbon is selected from the group consisting of: pentane, hexane, heptane and cyclohexane.

31. **METHOD,** according to claim 26 or 27, **characterized in that** the alkylaluminum type compound is a compound of the trialkylaluminum, alkylaluminum or chloride type or mixtures thereof.

32. **METHOD,** according to claim 26 or 27, **characterized in that** the alkylaluminum type compound is selected from the group consisting of: triethylaluminum (TEA), triisobutylaluminum (TIBA), trimethylaluminum (TMA), tri-n-butylaluminum, tri-n-hexylaluminum, diethylaluminum chloride (DEAC), diisobutylaluminum chloride and dimethylaluminum chloride (DMAC).

33. **METHOD,** according to claim 26 or 27, **characterized in that** the proportion of hydrocarbon relative to the mass of spherical alumina support used for the reaction is between 4 ml and 20 ml for each gram of support.

34. **METHOD,** according to claim 26, **characterized in that** the amount of alkylaluminum used is equivalent to the molar ratio between alkylaluminum and hydroxyl content of the spherical alumina support and should be between 0.1 to 5.0.

35. **METHOD,** according to claim 34, **characterized in that** the amount of alkylaluminum used is equivalent to the molar ratio between alkylaluminum and hydroxyl content of the spherical alumina support and should be between 0.2 to 2.0.

36. **METHOD,** according to claim 27, **characterized in that** the amount of alkylaluminum used is equivalent to the molar ratio between alkylaluminum and residual alcohol in the spherical alumina support modified with magnesium and should be between 0.1 to 5.0.

37. **METHOD,** according to claim 36, **characterized in that** the amount of alkylaluminum used is equivalent to the molar ratio between alkylaluminum and residual alcohol in the spherical alumina support modified with magnesium and should be between 0.2 to 2.0.

38. **METHOD,** according to claim 26 or 27, **characterized in that** the reaction with the alkylaluminum type compound is carried out at temperatures between 0°C and 60°C.

39. **METHOD,** according to claim 38, **characterized in that** the reaction with the alkylaluminum type compound is carried out at ambient temperature.

40. **METHOD,** according to claims 11, 26 or 27, **characterized in that** the mixture comprising the alumina support modified magnesium, alkylaluminum and hydrocarbon is maintained under agitation for a period of time ranging from 5 minutes to 5 hours, followed by the separation and drying the support.

41. **METHOD,** according to claim 40, **characterized in that** the mixture comprising the alumina support modified by magnesium, alkylaluminum and hydrocarbon is maintained under agitation for a period of time ranging from 10 minutes to 2 hours.

42. **METHOD,** according to claim 11, **characterized in that** the titanium halide is selected from among: TiCl₄, TiBr₄ and Til₄ or mixtures thereof.

43. **METHOD,** according to claim 11, **characterized in that** the titanium halide to be used pure or diluted in hydrocarbons in the volumetric proportion of the titanium compound relative to the hydrocarbon from 5% to 90%.

44. **METHOD,** according to claim 11, **characterized in that** the amount of titanium halide used is in the proportion of 1 to 50 moles of titanium per mol of magnesium in the support.

45. **METHOD,** according to claim 11, **characterized in that** the titanation step is performed at a temperature between 0°C and 150°C, for a period of time from 30 minutes to 6 hours.

46. **METHOD,** according to claim 45, **characterized in that** the temperature in the titanation step is between 80°C and 135°C.

47. **METHOD,** according to claim 45, **characterized in that** the titanation step takes place over a period of time between 1 and 3 hours.

48. **METHOD,** according to claim 11, **characterized in that** the titanation step comprises the addition of an internal electron donor (DI) in the Mg/DI molar ratio of 4 to 20.

49. **METHOD,** according to claim 48, **characterized by** the fact that the Mg/DI molar ratio is 7 to 13.

50. **METHOD,** according to claim 48, **characterized by** the fact that the internal electron donor is a benzoate type compound, selected from the group comprising methyl benzoate, ethyl benzoate, methyl toluate and ethyl anisate; phthalate, selected from the group comprising dimethyl phthalate, diethyl phthalate, dipropyl phthalate, diisopropyl phthalate, dibutylphthalate, diisobutyl phthalate, diphenyl phthalate; or 1,3-diether selected from the group comprising 2-methyl-2-isopropyl-1,3-dimethoxypropane, 2,2-diisobutyl-1,3-dimethoxypropane and 2-isopropyl-2-cyclopentyl-1,3-dimethoxypropane.
